# EUROPÄISCHE PATENTANMELDUNG

(11) **EP 2 479 512 A1**
(43) Veröffentlichungstag der Anmeldung: **25.07.2012**
(21) Anmeldenummer: 11152050.8
(22) Anmeldetag: 25.01.2011
(51) Int. Cl.: F24J 2/52

(54) **Tragwerksystem sowie Verfahren zur Montage eines Tragwerksystems**

(71) Anmelder: Sonnenzeit GmbH, 33397 Rietberg (DE)
(72) Erfinder: Kordtomeikel, Klaus, 33397, Rietberg (DE)
(74) Vertreter: Schurack, Eduard F.

(57) **Zusammenfassung**

Die Erfindung betrifft ein Tragwerksystem mit einem Tragwerkmodul (1) zur Aufnahme und Abstützung von Solarzellen (2) in einem Solarmodul (3) einer Photovoltaikanlage und mit zumindest zwei Bodenschienen (4), wobei das Tragwerkmodul (1) einen Solarmodulrahmen (5) umfasst, welcher dazu ausgebildet ist, das Solarmodul (3) aufzunehmen, sowie ein Windleitelement (6), welches an dem Solarmodulrahmen (5) angebracht ist und sich über die Länge einer Kante des Solarmodulrahmens (5) erstreckt, wobei das Tragwerkmodul (1) über den Solarmodulrahmen (5) und das Windleitelement (6) an den Bodenschienen (4) so anbringbar ist, dass durch den Verbindungsbereich von Solarmodulrahmen (5) und Windleitelement (6) ein den Bodenschienen (4) gegenüberliegender First (7) ausgebildet wird, wobei das Windleitelement (6) an dem Solarmodulrahmen (5) über zumindest ein Gelenk (8) beweglich angelenkt ist.

## Beschreibung

Die Erfindung betrifft ein Tragwerksystem mit einem Tragwerkmodul zur Aufnahme und Abstützung von Solarzellen in einem Solarmodul einer Photovoltaikanlage und mit zumindest zwei Bodenschienen, wobei das Tragwerkmodul einen Solarmodulrahmen umfasst, welcher dazu ausgebildet ist, das Solarmodul aufzunehmen, sowie ein Windleitelement, welches an dem Solarmodulrahmen angebracht ist und sich über die Länge einer Kante des Solarmodulrahmens erstreckt, wobei das Tragwerkmodul über den Solarmodulrahmen und das Windleitelement an den Bodenschienen so anbringbar ist, dass durch den Verbindungsbereich von Solarmodulrahmen und Windleitelement ein an den Bodenschienen gegenüberliegender First ausgebildet wird. Die Erfindung betrifft auch ein Verfahren zur Montage eines Tragwerksystems.

Im Stand der Technik sind verschiedene Flachdachmontagesysteme für Solarmodule einer Photovoltaikanlage bekannt. Mit Hilfe dieser Montagesysteme können die Solarmodule großflächig auf Industrie- und Gewerbeflachdächern unter einem geeigneten Neigungswinkel gegenüber der Sonneneinstrahlung angebracht werden. Solche Montagesysteme setzen sich typischerweise aus vier Hauptkomponenten zusammen: Zunächst werden auf dem Flachdach geeignete Bodenschienen in definiertem Abstand zueinander verlegt. Anschließend werden unter einem bestimmten Neigungswinkel Rahmenelemente auf diesen Bodenschienen angebracht, in welchen sich die Solarmodule der Photovoltaikanlage befestigen lassen bzw. bereits befestigt sind. Neigungswinkel und Abstand der Rahmenelemente werden hierbei so gewählt, dass die Sonneneinstrahlung auf die Solarmodule am jeweiligen Aufstellungsort bestmöglich angepasst ist. Anschließend werden an der nicht sonnenbeschienenen Rückseite der geneigt aufgestellten Solarmodule Windbleche befestigt, durch die das Zustandekommen von Staudruck (aufgrund von Wind) unter den Solarmodulen vermindert wird.

Hierbei ist es üblich, das Windblech als separates Bauteil an der Rückseite der Solarmodule, z. B. über Schrauben, zu befestigen. Die Montage der Windbleche erfordert hierbei häufig viel Zeit. Die Vielzahl an Einzelteilen führt zu einem hohen Montageaufwand vor Ort.

Gerade industrielle oder gewerbliche Flachdächer besitzen eine große Dachfläche, auf der eine sehr hohe Anzahl an Solarmodulen installierbar ist. Um die Montagekosten gering zu halten, eine reibungslose Baulogistik zu gewährleisten und Beeinträchtigungen für den Bauherrn gering zu halten, ist eine reibungslose und schnelle Anbringung der Solarmodule wünschenswert.

Es ist Aufgabe der Erfindung, ein Tragwerksystem zur Aufnahme und Abstützung von Solarzellen bereitzustellen, das einfach zu transportieren und mit geringem Montageaufwand zu installieren ist. Zudem soll ein vereinfachtes Verfahren zur Montage eines Tragwerksystems bereitgestellt werden.

Diese Aufgabe wird durch ein Tragwerksystem, welches die Merkmale des Patentanspruchs 1 aufweist, sowie ein Verfahren zur Montage eines Tragwerksystems, welches die Merkmale des Patentanspruchs 10 aufweist, gelöst.

Ein erfindungsgemäßes Tragwerksystem umfasst ein Tragwerkmodul zur Aufnahme und Abstützung von Solarzellen in einem Solarmodul einer Photovoltaikanlage sowie mit zumindest zwei Bodenschienen, wobei das Tragwerkmodul einen Solarmodulrahmen umfasst, welcher dazu ausgebildet ist, das Solarmodul aufzunehmen, und wobei das Tragwerkmodul ein Windleitelement umfasst, welches an dem Solarmodulrahmen angebracht ist und sich über die Länge einer Kante des Solarmodulrahmens erstreckt, wobei das Tragwerkmodul über den Solarmodulrahmen und das Windleitelement an den Bodenschienen so anbringbar ist, dass durch den Verbindungsbereich von Solarmodulrahmen und Windleitelement ein den Bodenschienen gegenüberliegender First ausgebildet wird. Erfindungsgemäß ist das Windleitelement an dem Solarmodulrahmen über zumindest ein Gelenk beweglich angelenkt.

Es ergibt sich ein einfach transportier- und montierbares Tragwerksystem. Durch das am Solarmodulrahmen angelenkte Windleitelement ist ein kompaktes und zusammenklappbares Tragwerkmodul geschaffen, das sich sehr einfach zum Aufstellungsort transportieren lässt. Die Installation des Tragwerkmoduls ist vereinfacht, da das Windleitelement nicht mehr in einem separaten Arbeitsschritt an dem Solarmodulrahmen befestigt werden muss. Die Arbeitszeit vor Ort ist gering. Das Tragwerkmodul kann aufgeklappt und anschließend in wenigen Arbeitsschritten an den Bodenschienen positioniert werden. Trotz schnellen und einfachen Aufbaus ist das Tragwerksystem äußerst robust und zeichnet sich durch eine hohe Windbeständigkeit sowie aerodynamische Stabilität aus. Alle Bauteile können sicher aneinander befestigt werden. Eine optimale Einstellung des Tragwerkmoduls auf unterschiedliche Anstellwinkel ist gewährleistet. Die Anzahl der benötigten Arbeitsschritte und Werkzeuge wird gering gehalten.

Vorzugsweise ist das Windleitelement an dem Solarmodulrahmen schwenkbar um eine Drehachse angeordnet, welche parallel zu der Kante des Solarmodulrahmens verläuft, über deren Länge sich das Windleitelement an dem Solarmodulrahmen erstreckt. Die durch das Windleitelement und den Solarmodulrahmen aufgespannten Flächen lassen sich dann um eine gemeinsame Drehachse verschwenken. Hierdurch kann insbesondere ein zusammengeklappter Zustand des Tragwerkmoduls erzielt werden, bei dem die durch das Windleitelement und den Solarmodulrahmen aufgespannten Flächen parallel zueinander liegen. Das Tragwerkmodul ist in einem solchen zusammengeklappten Zustand quasi flächig zweidimensional ausgebildet und kann auf Lastwägen sowie von Montagearbeitern besonders einfach und schnell transportiert werden. Das benötigte Volumen bei der Lagerung wird gering gehalten.

Vorzugsweise ist das zumindest eine Gelenk als Scharnier ausgebildet. Durch das Scharnier wird eine sehr robuste und stabile Schwenkverbindung zwischen dem Windleitelement und dem Solarmodulrahmen ausgebildet. Auch im montierten Zustand des Tragwerksystems garantieren Scharniere eine dauerhafte, feste und stabile Verbindung der Einzelkomponenten des Tragwerkmoduls. Durch Windlast auftretende Kräfte können gut aufgenommen und auf das gesamte Tragwerkmodul verteilt werden.

Vorzugsweise ist das Windleitelement als Flächentragglied für die Abstützung des Solarmodulrahmens ausgebildet. Dann kann eine auf den mit Solarzellen bestückten Solarmodulrahmen wirkende Windlast auch von dem Windleitelement gegenüber den Bodenschienen abgestützt werden. Das Windleitelement übernimmt dann auch die Übertragung von Kräften auf die Bodenschienen, welche auf das Tragwerkmodul wirken. Das Windleitelement erhält eine doppelte Funktionalität, indem es Windstaudruck unter dem mit Solarzellen bestückten Solarmodulrahmen verhindert und andererseits als konstruktives Element wirkt.

Vorzugsweise ist ein Firstwinkel zwischen Windleitelement und Solarmodulrahmen kontinuierlich einstellbar. Unter Firstwinkel kann insbesondere ein Innenwinkel eines gedachten Dreiecks verstanden werden, dessen Seiten durch Elemente einer Bodenschiene, des Windleitelements und des Solarmodulrahmens gebildet werden. Der Firstwinkel kann spitz oder stumpf sein. Die kontinuierliche Einstellbarkeit des Firstwinkels gewährleistet, dass der Solarmodulrahmen gegenüber den Bodenschienen hinsichtlich seines Neigungswinkels kontinuierlich positionierbar ist. Hierdurch ist gewährleistet, den für den jeweiligen Aufstellort optimalen Winkel des Solarmoduls gegenüber der Sonneneinstrahlung zu wählen. Kontinuierlich kann insbesondere im Sinne von stufenlos verstanden werden. Alternativ kann jedoch auch vorgesehen sein, dass der Firstwinkel zwischen Windleitelement und Solarmodulrahmen in verschiedenen, diskreten Stufen einstellbar ist, wobei das Windleitelement gegenüber dem Solarmodulrahmen gegebenenfalls in diesen verschiedenen Winkelstellungen einrasten kann. Hierdurch lassen sich dann vorher festlegbare Sollneigungswinkel besonders schnell und intuitiv einstellen. Besonders bevorzugt ist es, wenn der Firstwinkel auf im Wesentlichen 0° einstellbar ist, so dass das Windleitelement und der Solarmodulrahmen im Wesentlichen flächig aufeinander zu liegen kommen. Dann ist der Transport des Tragwerkmoduls besonders einfach.

Vorzugsweise ist der Solarmodulrahmen und/oder das Windleitelement aus Aluminium und/oder Edelstahl ausgebildet. Hierdurch wird erreicht, dass das Tragwerksystem insbesondere für die Montage auf Flachdächern geeignet ist und nur geringfügig zur Dachlast beiträgt. Leichtbaumaterialien gewährleisten ein hohes Maß an konstruktiver und aerodynamischer Stabilität bei gleichzeitig geringem Gewichtseintrag.

Vorzugsweise ist in den Bodenschienen jeweils zumindest ein Aufnahmebereich für die Aufnahme des Windleitelements ausgebildet. Der Aufnahmebereich kann dann insbesondere eine Sollposition vorgeben, an welcher das Windleitelement zu positionieren ist, z. B. indem es einrastet. Ist auch die Position für die Anbringung des Solarmodulrahmens an der Bodenschiene vorgegeben, so ist durch den Aufnahmebereich ein Firstwinkel bzw. Neigungswinkel des Solarmodulrahmens vorgegeben. Der Neigungswinkel muss dann bei Montage des Tragwerksystems nicht mehr einzeln für jedes Tragwerkmodul gemessen und eingestellt werden, sondern ist durch die Ausgestaltung der Bodenschienen bereits vorgegeben. Dies erhöht die Montagegeschwindigkeit und reduziert Montagefehler.

Vorzugsweise umfasst das Tragwerksystem zumindest ein Zug- oder Druckspannung vermittelndes Element, welches zwischen einer der Bodenschienen und dem First angeordnet ist und das Tragwerkmodul gegenüber der Bodenschiene fixiert. Das Zug- oder Druckspannung vermittelnde Element kann insbesondere als Stab ausgebildet sein. Durch dieses Element lässt sich das Tragwerkmodul gegenüber den Bodenschienen in einer ausgewählten Position arretieren. Der Neigungswinkel ist dann fest eingestellt und verändert sich auch bei hohen Windbelastungen nicht. Das Tragwerkmodul ist dauerhaft und beständig an der Bodenschiene befestigt. Ist das Element als Druckspannung vermittelndes Element ausgebildet, kann es insbesondere das Windleitelement entlasten, z. B. im Falle hoher Schneelasten auf dem Tragwerkmodul. Alternativ kann jedoch auch das Element als Zugspannung vermittelndes Element ausgebildet sein, z. B. als Kette. Auch diese Ausführungsform fixiert das Tragwerkmodul sicher gegenüber der Bodenschiene.

Vorzugsweise ist am Solarmodulrahmen im Bereich des Firsts ein Befestigungselement angebracht, an welchem das Zug- oder Druckspannung vermittelnde Element so anbringbar ist, dass eine einstellbare Höhe des Firsts über den Bodenschienen durch das Zug- oder Druckspannung vermittelnde Element fixierbar ist. Durch Fixierung der Höhe kann auch der Neigungswinkel des Solarmodulrahmens dauerhaft arretiert werden. Die Notwendigkeit, das Tragwerksystem häufig zu warten und gegebenenfalls den Neigungswinkel nachzujustieren entfällt dadurch.

Das erfindungsgemäße Verfahren zur Montage eines Tragwerksystems umfasst die folgenden Schritte:
a) Anbringen von zumindest zwei Bodenschienen auf einer Oberfläche;
b) Bereitstellen eines Tragwerkmoduls mit einem Solarmodulrahmen, welches dazu ausgebildet ist, ein Solarmodul einer Photovoltaikanlage aufzunehmen, sowie einem Windleitelement, welches an dem Solarmodulrahmen über zumindest ein Gelenk beweglich angelenkt ist und sich über die Länge einer Kante des Solarmodulrahmens erstreckt;
c) Anbringen des Solarmodulrahmens an den Bodenschienen;
d) Ausbilden eines den Bodenschienen gegenüberliegenden Firsts am Verbindungsbereich von Solarmodulrahmen und Windleitelement und Einstellen des Firstwinkels durch Schwenken des zumindest einen Gelenks; und
e) Positionieren des Windleitelements an den Bodenschienen.

Es ist insbesondere kein separater Schritt für das Anbringen des Windleitelements an dem Solarmodulrahmen erforderlich, da beide bereits aneinander angelenkt sind und als integriertes Tragwerkmodul bereitgestellt werden. Das Montageverfahren ist hierdurch besonders einfach.

Vorzugsweise umfasst das Verfahren die folgenden zusätzlichen Schritte:
a0) Festlegen eines Firstwinkels an dem First zwischen Solarmodulrahmen und Windleitelement;
a1) in Abhängigkeit von dem festgelegten Firstwinkel, Auswahl von zumindest zwei gleichartigen Bodenschienen aus einer Gruppe mit zumindest zwei verschiedenen Typen von Bodenschienen, wobei sich die verschiedenen Typen von Bodenschienen hinsichtlich eines Abstands von zumindest zwei in jeder Bodenschiene ausgebildeten Aufnahmebereichen unterscheiden, wobei die jeweils zumindest zwei Aufnahmebereiche für die Aufnahme von je einem Windleitelement ausgebildet sind;
a2) Anbringen der zumindest zwei ausgewählten Bodenschienen auf der Oberfläche;
e1) Positionieren des Windleitelements an den angebrachten Bodenschienen in je einem Aufnahmebereich der angebrachten Bodenschienen; und
f) Fixieren des Tragwerkmoduls gegenüber zumindest einer der angebrachten Bodenschienen durch Anbringen eines Zug- oder Druckspannung vermittelnden Elements zwischen der zumindest einen Bodenschiene und dem First.

Vorzugsweise umfasst die Gruppe einen ersten Typ von Bodenschiene, bei dem die Aufnahmebereiche in der Bodenschiene einen ersten Abstand zueinander haben und die Aufnahmebereiche einen ersten Neigungswinkel des Solarmodulrahmens gegenüber der Bodenschiene festlegen. Dann umfasst die Gruppe vorzugsweise einen zweiten Typ von Bodenschiene, deren Aufnahmebereiche einen zweiten Abstand zueinander haben, welcher größer als der erste Abstand ist, und wobei die Aufnahmebereiche einen zweiten Neigungswinkel des Solarmodulrahmens gegenüber der Bodenschiene festlegen, welcher größer als der erste Neigungswinkel ist. Je größer der Neigungswinkel, desto größer die potenzielle Verschattung der Solarmodule untereinander, desto größer sollte der Abstand zwischen den Aufnahmebereichen gewählt werden.

Vorzugsweise umfasst das Verfahren den zusätzlichen Schritt des Anbringens eines Solarmoduls einer Photovoltaikanlage in dem Solarmodulrahmen.

Die mit Bezug auf das erfindungsgemäße Tragwerksystem vorgestellten bevorzugten Ausführungsformen und deren Vorteile gelten entsprechend für das erfindungsgemäße Verfahren.

Anhand von Ausführungsbeispielen wird die Erfindung im Folgenden näher erläutert. Es zeigen:
- Fig. 1: ein Ausführungsbeispiel eines Tragwerksystems mit zwei Tragwerkmodulen in perspektivischer Darstellung;
- Fig. 2: ein Tragwerksystem mit einer Vielzahl von Tragwerkmodulen in einer perspektivischen Rückansicht mit Blick auf die Windleitbleche der Tragwerkmodule;
- Fig. 3: einen Ausschnitt eines Tragwerkmoduls in perspektivischer Darstellung im Bereich des Firsts; und
- Fig. 4: einen Ausschnitt eines Tragwerksystems, dessen Tragwerkmodul über ein Befestigungselement am First und einen Stab an einer Bodenschiene befestigt ist.

In den Figuren sind gleiche oder funktionsgleiche Elemente mit den gleichen Bezugszeichen versehen.

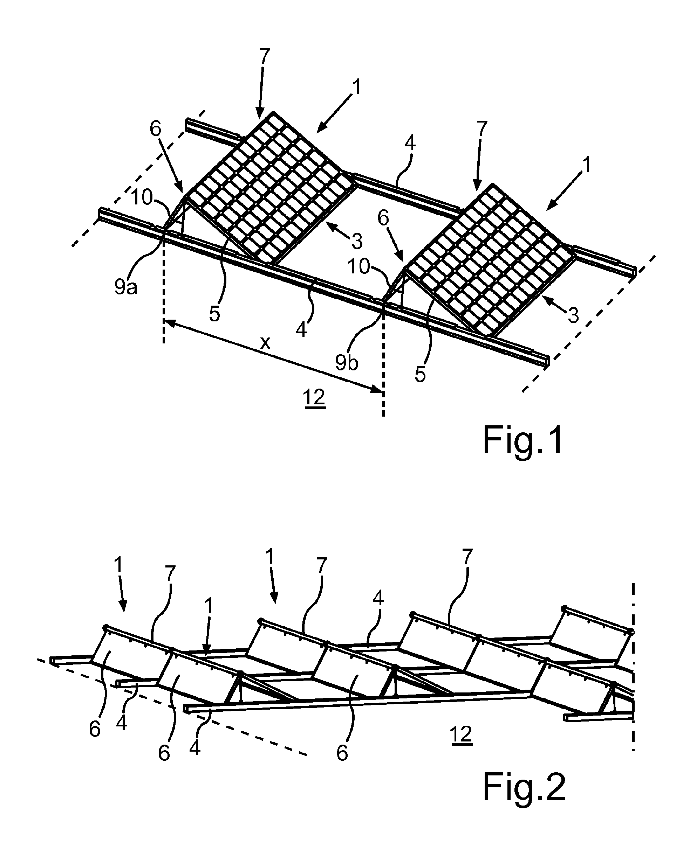

Fig. 1 zeigt ein Ausführungsbeispiel eines erfindungsgemäßen Tragwerksystems mit zwei Bodenschienen 4 und zwei Tragwerkmodulen 1. Die Tragwerkmodule 1 sind jeweils an den zwei parallel zueinander verlaufenden Bodenschienen 4 angebracht. Die Bodenschienen 4 sind hierbei auf einem Flachdach 12 eines Gebäudes fixiert. Jedes der Tragwerkmodule 1 umfasst einen Solarmodulrahmen 5 und ein Windleitblech 6. Der Solarmodulrahmen 5 ist mit einer Vielzahl von Solarzellen 2 eines Solarmoduls 3 bestückt. Alternativ ist jedoch denkbar, das Tragwerkmodul 1 im Tragwerksystem zu montieren, ohne bereits ein Solarmodul 3 im Solarmodulrahmen 5 zu installieren. Das Solarmodul 3 könnte dann im Tragwerkmodul 1 nachgerüstet werden.

Das Windleitblech 6 erstreckt sich über die Länge einer Kante des Solarmodulrahmens 5 und ist in diesem Bereich am Solarmodulrahmen 5 angelenkt. Hierdurch ergibt sich eine Konstruktion, welche im Schnitt Dreiecksform aufweist, wobei die drei Eckseiten durch jeweils einen Teilbereich der Bodenschiene 4, einer Kante des Solarmodulrahmens 5 und einer Kante des Windleitblechs 6 gebildet werden.

Der Solarmodulrahmen 5 weist gegenüber den Bodenschienen 4 bzw. dem Flachdach 12 einen Neigungswinkel auf, welcher durch die Höhe des Windleitblechs 6 und dessen Anlenkwinkel an den Solarmodulrahmen 5 festgelegt wird. Das Windleitblech 6 ist in Aufnahmebereichen 9a der Bodenschienen 4 fixiert. Da auch der Solarmodulrahmen 5 an den Bodenschienen 4 befestigt ist, ist hierdurch eine stabile und im Neigungswinkel konstante Keilkonstruktion des Tragwerkmoduls 1 geschaffen. Der Neigungswinkel wird hierbei optimal auf die Sonneneinstrahlrichtung ausgerichtet. Zudem ist der Schattenwurf der Tragwerkmodule 1 zu berücksichtigen. Deshalb ist ein Abstand x zwischen den Tragwerkmodulen 1 bzw. den jeweiligen Aufnahmebereichen 9a und 9b vorgesehen, durch welchen sichergestellt ist, dass das erste Tragwerkmodul 1 keinen Schattenwurf auf das Solarmodul 3 des zweiten Tragwerkmoduls 1 verursacht. Es ist nach einem optimalen Kompromiss zwischen Dichte der Tragwerkmodule 1 auf dem Flachdach 12 (also möglichst kleinen Abständen x) und geeigneten Neigungswinkeln der Solarmodulrahmen 5 zu suchen.

Fig. 2 zeigt ein Tragwerksystem mit einer Vielzahl von Tragwerkmodulen 1 in Rückansicht. Die Windleitbleche 6 dienen hierbei einerseits der Stabilität des Tragwerkmoduls 1 und verhindern zudem, dass sich unter dem Solarmodul 3 ein erhöhter Staudruck aufgrund von Wind ergibt.

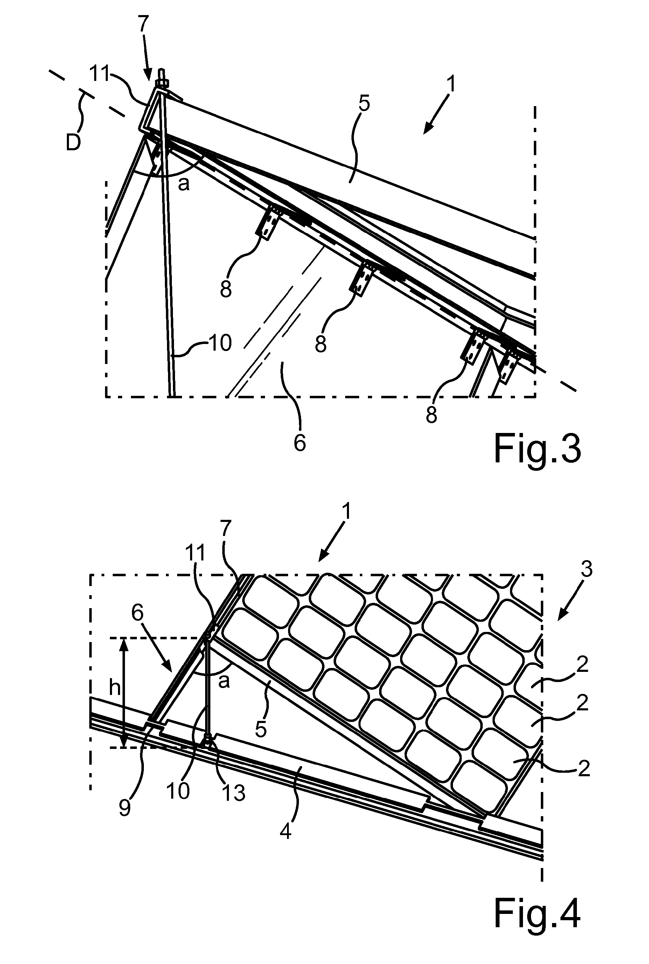

Fig. 3 zeigt einen Ausschnitt eines Tragwerkmoduls 1 im Bereich eines Firsts 7. Der First 7 ist durch eine Kante zwischen Solarmodulrahmen 5 und Windleitblech 6 gegenüber den Bodenschienen 4 ausgebildet. Im Bereich dieses First 7 ist das Windleitblech 6 an den Solarmodulrahmen über Scharniere 8 schwenkbar angelenkt. Das heißt, dass sich der Solarmodulrahmen 5 und das Windleitblech 6 reversibel um eine Drehachse D kontinuierlich gegeneinander verschwenken lassen, so dass ein Firstwinkel a in bauartbedingt vorgegebenen Grenzen kontinuierlich einstellbar ist. Im Ausführungsbeispiel kann das Windleitblech 6 gegenüber dem Solarmodulrahmen 5 in eine Position verbracht werden, bei der der Firstwinkel a Null Grad beträgt. Das Windleitblech 6 liegt dann flach auf dem Solarmodulrahmen 5 auf. In dieser Konfiguration kann das Tragwerkmodul 1 sehr leicht transportiert und gelagert werden. Sobald das Tragwerksystem montiert wird, muss das Tragwerkmodul 1 lediglich ausgeklappt werden, d. h. es wird der Firstwinkel a eingestellt.

Wie in Fig. 4 dargestellt, ist im Ausführungsbeispiel der Firstwinkel a durch die bauliche Ausgestaltung der Bodenschiene 4 festgelegt. Während der Montage wird der Solarmodulrahmen 5 in einem vorgegebenen Bereich an der Bodenschiene 4 fixiert. Für das Windleitblech 6 steht dann in der Bodenschiene 4 ein Aufnahmebereich 9 zur Verfügung, in welchem dieses Windleitblech 6 abgestützt und gegebenenfalls fixiert wird. Dies legt den Firstwinkel a fest. Dadurch, dass das Tragwerkmodul 1 lediglich aufgeklappt werden muss, entfällt die Notwendigkeit, in einem separaten Montageschritt das Windleitblech 6 am Solarmodulrahmen 5 anzuschrauben oder auf ähnliche Art und Weise zu befestigen. Das Tragwerkmodul 1 kann so besonders schnell aufgestellt und installiert werden. Eine Höhe h des Firsts 7 über der Bodenschiene 4 ergibt sich hierdurch quasi automatisch. Ein aufwendiges Justieren des Firstwinkels a bzw. des Neigungswinkels des Solarmodulrahmens 5 gegenüber der Bodenschiene 4 kann entfallen.

Schließlich kann das Tragwerkmodul 1 gegenüber der Bodenschiene 4 in der jeweiligen Position durch einen Stab 10 arretiert werden. Der Stab 10 wird hierzu an dem First 7 über ein Befestigungselement 11 mittels einer Schraube (siehe Fig. 3) fixiert. Mit der Bodenschiene 4 ist er über eine aufgeschweißte Muffe 13 fest verbunden. Der Stab 10 wirkt im Ausführungsbeispiel als Zugspannung vermittelndes Element, indem er über die Schraube am Befestigungselement 11 den First 7 gegen die Bodenschiene 4 zieht. Ein Anheben des Tragwerkmoduls 1, z. B. durch Auftriebskräfte bei hohen Windgeschwindigkeiten, wird hierdurch zuverlässig vermieden. Zudem ist der Firstwinkel a sicher arretiert.

Im Rahmen der Montage des Tragwerksystems werden zunächst die Bodenschienen 4 auf dem Flachdach 12 verlegt und anschließend die Tragwerkmodule 1 antransportiert. Sie müssen dann nur noch aufgeklappt werden und in der keilförmigen Anordnung auf den Bodenschienen 4 mittels der Stäbe 10 arretiert werden. Die jeweiligen Aufstellpositionen sind hierbei durch die Aufnahmebereiche 9 fest vorgegeben. Diese legen auch den Neigungswinkel der Solarmodulrahmen 5 gegenüber den Bodenschienen 4 fest. Die Montage kann insgesamt sehr schnell und aufwandsarm durchgeführt werden, wobei Fehler in Bezug auf den eingestellten Neigungswinkel zuverlässig vermieden werden.

## Patentansprüche

1. Tragwerksystem mit einem Tragwerkmodul (1) zur Aufnahme und Abstützung von Solarzellen (2) in einem Solarmodul (3) einer Photovoltaikanlage und mit zumindest zwei Bodenschienen (4), wobei das Tragwerkmodul (1) einen Solarmodulrahmen (5) umfasst, welcher dazu ausgebildet ist, das Solarmodul (3) aufzunehmen, sowie ein Windleitelement (6), welches an dem Solarmodulrahmen (5) angebracht ist und sich über die Länge einer Kante des Solarmodulrahmens (5) erstreckt, wobei das Tragwerkmodul (1) über den Solarmodulrahmen (5) und das Windleitelement (6) an den Bodenschienen (4) so anbringbar ist, dass durch den Verbindungsbereich von Solarmodulrahmen (5) und Windleitelement (6) ein den Bodenschienen (4) gegenüberliegender First (7) ausgebildet wird,
**dadurch gekennzeichnet, dass**
das Windleitelement (6) an dem Solarmodulrahmen (5) über zumindest ein Gelenk (8) beweglich angelenkt ist.

2. Tragwerksystem nach Anspruch 1,
**dadurch gekennzeichnet, dass**
das Windleitelement (6) an dem Solarmodulrahmen (5) schwenkbar um eine Drehachse (D) angeordnet ist, welche parallel zu der Kante des Solarmodulrahmens (5) verläuft, über deren Länge sich das Windleitelement (6) an dem Solarmodulrahmen (5) erstreckt.

3. Tragwerksystem nach Anspruch 1 oder 2,
**dadurch gekennzeichnet, dass**
das zumindest eine Gelenk als Scharnier (8) ausgebildet ist.

4. Tragwerksystem nach einem der vorhergehenden Ansprüche,
**dadurch gekennzeichnet, dass**
das Windleitelement (6) als Flächentragglied für die Abstützung des Solarmodulrahmens (5) ausgebildet ist.

5. Tragwerksystem nach einem der vorhergehenden Ansprüche,
**dadurch gekennzeichnet, dass**
ein Firstwinkel (a) zwischen Windleitelement (6) und Solarmodulrahmen (5) kontinuierlich einstellbar ist.

6. Tragwerksystem nach einem der vorhergehenden Ansprüche,
**dadurch gekennzeichnet, dass**
der Solarmodulrahmen (5) und/oder das Windleitelement (6) aus Aluminium und/oder Edelstahl ausgebildet ist bzw. sind.

7. Tragwerksystem nach einem der vorhergehenden Ansprüche,
**dadurch gekennzeichnet, dass**
in den Bodenschienen (4) jeweils zumindest ein Aufnahmebereich (9) für die Aufnahme des Windleitelements (6) ausgebildet ist.

8. Tragwerksystem nach einem der vorhergehenden Ansprüche,
**gekennzeichnet durch**
zumindest ein Zug- oder Druckspannung vermittelndes Element, insbesondere einen Stab (10), welches zwischen einer der Bodenschienen (4) und dem First (7) angeordnet ist und das Tragwerkmodul (1) gegenüber der Bodenschiene (4) fixiert.

9. Tragwerksystem nach Anspruch 7 und 8,
**dadurch gekennzeichnet, dass**
am Solarmodulrahmen (5) im Bereich des Firsts (7) ein Befestigungselement (11) angebracht ist, an welchem das Zug- oder Druckspannung vermittelnde Element (10) so anbringbar ist, dass eine einstellbare Höhe (h) des Firsts (7) über den Bodenschienen (4) durch das Zug- oder Druckspannung vermittelnde Element (10) fixierbar ist.

10. Verfahren zur Montage eines Tragwerksystems mit den folgenden Schritten:
a) Anbringen von zumindest zwei Bodenschienen (4) auf einer Oberfläche (12);
b) Bereitstellen eines Tragwerkmoduls (1) mit einem Solarmodulrahmen (5), welches dazu ausgebildet ist, ein Solarmodul (3) einer Photovoltaikanlage aufzunehmen, sowie einem Windleitelement (6), welches an dem Solarmodulrahmen (5) über zumindest ein Gelenk (8) beweglich angelenkt ist und sich über die Länge einer Kante des Solarmodulrahmens (5) erstreckt;
c) Anbringen des Solarmodulrahmens (5) an den Bodenschienen (4);
d) Ausbilden eines den Bodenschienen (4) gegenüberliegenden Firsts (7) am Verbindungsbereich von Solarmodulrahmen (5) und Windleitelement (6) und Einstellen des Firstwinkels (a) durch Schwenken des zumindest einen Gelenks (8); und
e) Positionieren des Windleitelements (6) an den Bodenschienen (4).

11. Verfahren nach Anspruch 10 mit den Schritten:
a0) Festlegen eines Firstwinkels (a) an dem First (7) zwischen Solarmodulrahmen (5) und Windleitelement (6);
a1) in Abhängigkeit von dem festgelegten Firstwinkel (a), Auswahl von zumindest zwei gleichartigen Bodenschienen (4) aus einer Gruppe mit zumindest zwei verschiedenen Typen von Bodenschienen (4), wobei sich die verschiedenen Typen von Bodenschienen (4) hinsichtlich eines Abstands (x) von zumindest zwei in jeder Bodenschiene (4) ausgebildeten Aufnahmebereichen (9a, 9b) unterscheiden, wobei die jeweils zumindest zwei Aufnahmebereiche (9a, 9b) für die Aufnahme von je einem Windleitelement (6) ausgebildet sind;
a2) Anbringen der zumindest zwei ausgewählten Bodenschienen (4) auf der Oberfläche (12);
e1) Positionieren des Windleitelements (6) an den angebrachten Bodenschienen (4) in je einem Aufnahmebereich (9a, 9b) der angebrachten Bodenschienen (4); und
f) Fixieren des Tragwerkmoduls (1) gegenüber zumindest einer der angebrachten Bodenschienen (4) durch Anbringen eines Zug- oder Druckspannung vermittelnden Elements (10) zwischen der zumindest einen Bodenschiene (4) und dem First (7).

12. Verfahren nach Anspruch 10 oder 11,
**gekennzeichnet durch** den Schritt:
Anbringen eines Solarmoduls (3) einer Photovoltaikanlage in dem Solarmodulrahmen (5).

## Geänderte Patentansprüche

### Geänderte Patentansprüche gemäss Regel 137(2) EPÜ.

**1.** Tragwerksystem mit einem Tragwerkmodul (1) zur Aufnahme und Abstützung von Solarzellen (2) in einem Solarmodul (3) einer Photovoltaikanlage und mit zumindest zwei Bodenschienen (4), wobei das Tragwerkmodul (1) einen Solarmodulrahmen (5) umfasst, welcher dazu ausgebildet ist, das Solarmodul (3) aufzunehmen, sowie ein Windleitelement (6), welches an dem Solarmodulrahmen (5) angebracht ist und sich über die Länge einer Kante des Solarmodulrahmens (5) erstreckt, wobei das Tragwerkmodul (1) über den Solarmodulrahmen (5) und das Windleitelement (6) an den Bodenschienen (4) so anbringbar ist, dass durch den Verbindungsbereich von Solarmodulrahmen (5) und Windleitelement (6) ein den Bodenschienen (4) gegenüberliegender First (7) ausgebildet wird,
**dadurch gekennzeichnet, dass**
das Windleitelement (6) an dem Solarmodulrahmen (5) über zumindest ein Gelenk (8) beweglich angelenkt ist, wobei in den Bodenschienen (4) jeweils zumindest ein Aufnahmebereich (9) für die Aufnahme des Windleitelements (6) ausgebildet ist.

**2.** Tragwerksystem nach Anspruch 1,
**dadurch gekennzeichnet, dass**
das Windleitelement (6) an dem Solarmodulrahmen (5) schwenkbar um eine Drehachse (D) angeordnet ist, welche parallel zu der Kante des Solarmodulrahmens (5) verläuft, über deren Länge sich das Windleitelement (6) an dem Solarmodulrahmen (5) erstreckt.

**3.** Tragwerksystem nach Anspruch 1 oder 2,
**dadurch gekennzeichnet, dass**
das zumindest eine Gelenk als Scharnier (8) ausgebildet ist.

**4.** Tragwerksystem nach einem der vorhergehenden Ansprüche,
**dadurch gekennzeichnet, dass**
das Windleitelement (6) als Flächentragglied für die Abstützung des Solarmodulrahmens (5) ausgebildet ist.

**5.** Tragwerksystem nach einem der vorhergehenden Ansprüche,
**dadurch gekennzeichnet, dass**
ein Firstwinkel (a) zwischen Windleitelement (6) und Solarmodulrahmen (5) kontinuierlich einstellbar ist.

**6.** Tragwerksystem nach einem der vorhergehenden Ansprüche,
**dadurch gekennzeichnet, dass**
der Solarmodulrahmen (5) und/oder das Windleitelement (6) aus Aluminium und/oder Edelstahl ausgebildet ist bzw. sind.

**7.** Tragwerksystem nach einem der vorhergehenden Ansprüche,
**gekennzeichnet durch**
zumindest ein Zug- oder Druckspannung vermittelndes Element, insbesondere einen Stab (10), welches zwischen einer der Bodenschienen (4) und dem First (7) angeordnet ist und das Tragwerkmodul (1) gegenüber der Bodenschiene (4) fixiert.

**8.** Tragwerksystem nach Anspruch 7,
**dadurch gekennzeichnet, dass**
am Solarmodulrahmen (5) im Bereich des Firsts (7) ein Befestigungselement (11) angebracht ist, an welchem das Zug- oder Druckspannung vermittelnde Element (10) so anbringbar ist, dass eine einstellbare Höhe (h) des Firsts (7) über den Bodenschienen (4) durch das Zug- oder Druckspannung vermittelnde Element (10) fixierbar ist.

**9.** Verfahren zur Montage eines Tragwerksystems mit den folgenden Schritten:
a) Anbringen von zumindest zwei Bodenschienen (4) auf einer Oberfläche (12);
b) Bereitstellen eines Tragwerkmoduls (1) mit einem Solarmodulrahmen (5), welches dazu ausgebildet ist, ein Solarmodul (3) einer Photovoltaikanlage aufzunehmen, sowie einem Windleitelement (6), welches an dem Solarmodulrahmen (5) über zumindest ein Gelenk (8) beweglich angelenkt ist und sich über die Länge einer Kante des Solarmodulrahmens (5) erstreckt;
c) Anbringen des Solarmodulrahmens (5) an den Bodenschienen (4);
d) Ausbilden eines den Bodenschienen (4) gegenüberliegenden Firsts (7) am Verbindungsbereich von Solarmodulrahmen (5) und Windleitelement (6) und Einstellen des Firstwinkels (a) durch Schwenken des zumindest einen Gelenks (8); und
e) Positionieren des Windleitelements (6) in an den Bodenschienen (4) jeweils ausgebildeten Aufnahmebereichen (9).

**10.** Verfahren nach Anspruch 9 mit den Schritten:
a0) Festlegen eines Firstwinkels (a) an dem First (7) zwischen Solarmodulrahmen (5) und Windleitelement (6);
a1) in Abhängigkeit von dem festgelegten Firstwinkel (a), Auswahl von zumindest zwei gleichartigen Bodenschienen (4) aus einer Gruppe mit zumindest zwei verschiedenen Typen von Bodenschienen (4), wobei sich die verschiedenen Typen von Bodenschienen (4) hinsichtlich eines Abstands (x) von zumindest zwei in jeder Bodenschiene (4) ausgebildeten Aufnahmebereichen (9a, 9b) unterscheiden, wobei die jeweils zumindest zwei Aufnahmebereiche (9a, 9b) für die Aufnahme von je einem Windleitelement (6) ausgebildet sind;
a2) Anbringen der zumindest zwei ausgewählten Bodenschienen (4) auf der Oberfläche (12);
e1) Positionieren des Windleitelements (6) an den angebrachten Bodenschienen (4) in je einem Aufnahmebereich (9a, 9b) der angebrachten Bodenschienen (4); und
f) Fixieren des Tragwerkmoduls (1) gegenüber zumindest einer der angebrachten Bodenschienen (4) durch Anbringen eines Zug- oder Druckspannung vermittelnden Elements (10) zwischen der zumindest einen Bodenschiene (4) und dem First (7).

**11.** Verfahren nach Anspruch 9 oder 10,
**gekennzeichnet durch** den Schritt:
Anbringen eines Solarmoduls (3) einer Photovoltaikanlage in dem Solarmodulrahmen (5).
